# EUROPÄISCHE PATENTSCHRIFT

(11) **EP 0 896 958 B1**
(45) Veröffentlichungstag und Bekanntmachung des Hinweises auf die Patenterteilung: **17.07.2002**
(21) Anmeldenummer: 97113853.2
(22) Anmeldetag: 11.08.1997
(51) Int. Cl.: C04B 7/43, F27D 17/00

(54) **Verfahren zur kombinierten Erzeugung von Zemenklinker und elektrischem Strom**
Process for combined production of cement clinker and electric current
Procédé pour la production simultanée de clinker de ciment et de courant électrique

(43) Veröffentlichungstag der Anmeldung: 17.02.1999
(73) Patentinhaber: E. Schwenk Zementwerke KG, 89077 Ulm (DE)
(72) Erfinder: Edelkott, Detlef, Dr.-Ing., 89584 Ehingen (DE)
(74) Vertreter: Patentanwälte Leinweber & Zimmermann

(56) Entgegenhaltungen:
- DE-A- 4 041 251
- DE-A- 19 518 926
- FR-A- 2 380 998
- FR-A- 2 505 473
- DATABASE WPI Section Ch, Week 8819 Derwent Publications Ltd., London, GB; Class J09, AN 88-129735 XP002052295 -& JP 63 073 090 A (KOBE STEEL LTD)
- E.STEINBISS: "Wege zur optimalen Nutzung der Abgaswärme in Zementofenanlagen mit Zyklonvorwärmer" ZKG INTERNATIONAL., Bd. 39, Nr. 2, Februar 1986, WIESBADEN DE, Seiten 75-79, XP002052294

## Beschreibung

Die Erfindung betrifft ein Verfahren zur kombinierten Erzeugung von Zementklinker und elektrischem Strom nach dem Oberbegriff des Patentanspruchs 1.

Die Herstellung von Zementen umfaßt neben dem Gewinnen und Aufbereiten der Ausgangsmaterialien das Brennen derselben zu Zementklinker sowie die gemeinsame Vermahlung dieses erbrannten Klinkers mit Gips und ggf. weiteren Zumahlstoffen zu Zement. Der Energiebedarf bei der Zementherstellung ergibt sich daher einerseits aus dem Bedarf an elektrischer Energie für die Aufbereitungsprozesse und sonstigen elektrischen Antriebe sowie andererseits aus dem Brennstoffbedarf des Brennprozesses.

Zur Durchführung des Brennprozesses werden heute fast ausschließlich Drehofenanlagen benutzt. In diesen Anlagen wird ein mehrstufiger Gegenstromprozeß betrieben, mit einem Drehrohrofen als zentraler Prozeßstufe. In dem Drehrohrofen wird das Ausgangsmaterial im Bereich der Drehofenfeuerung bis zur Teilschmelze erwärmt und durch diese Sinterung die Bildung der Klinkerphasen ermöglicht. Dem Drehrohrofen ist üblicherweise eine Zyklonvorwärmanlage vorgeschaltet, deren Bauausführung abhängig von der gewünschten Aufbereitung des Ausgangsmaterials ausgeführt wird. Darüber hinaus ist bei Anlagen neuerer Bauart zwischen Vorwärmer und Drehrohrofen eine Kalzinationsstufe angeordnet, in der das Kalziumkarbonat des mit der Zyklonvorwärmanlage vorgewärmten Brennguts bereits vor Eintritt in den Drehofen weitgehend entsäuert wird. Die dazu notwendige Energie kann dem Kalzinator über eine zusätzliche Feuerung zugeführt werden, deren Verbrennungsluft entweder mit den Ofengasen aus dem Drehrohrofen geleitet wird oder über eine separate Luftleitung aus dem Klinkerkühler als vorgewärmte Tertiärluft zur Zweitfeuerung gelangt.

Nach dem Durchlaufen des Drehrohrofens fällt das Brenngut in Form vorwiegend grobstückiger Klinkergranalien in den Klinkerkühler, wo es seinen Wärmeinhalt an im Gegenstrom dazu geführte Kühlluft abgibt, mit der die so rekuperierte Energie zum größten Teil als zur Verbrennung im Drehrohrofen benötigte Sekundärluft und ggf. als zur Zweitfeuerung im Kalzinator benötigte Tertiärluft in den Prozeß zurückgeführt wird.

Unabhängig von der Bauart der Vorwärmanlage und des Klinkerkühlers und unabhängig von der jeweiligen Verfahrensführung ist allen Drehrohrofensystemen gemeinsam, daß es sich um einen Gegenstromprozeß mit Wärmerückgewinnung sowohl aus dem Abgas als auch aus dem Brenngut handelt. Bei dieser Prozeßführung steht die aus dem Klinkerkühler in den Drehrohrofen zurückgeführte Sekundärluftmenge in einen unmittelbaren Zusammenhang mit der aus dem Drehrohrofen abgegebenen Abgasmenge. Dabei führt eine Erhöhung der Sekundärluftmenge über das für die Verbrennung der Brennstoffe benötigte Maß hinaus einerseits zu einer besseren Rekuperation der Klinkerwärme im Klinkerkühler, führt aber zwangsläufig zu einer Erhöhung der Abgasverluste und in der Gesamtbilanz daher zu einer Verschlechterung des Anlagenwirkungsgrades. Darüber hinaus führt eine Erniedrigung der Sekundärluftmenge bei einer vorgegebenen Brennstoffmenge zu einer unvollständigen Verbrennung. Dadurch kann das fertige Produkt, also der Zementklinker nachteilhaft beeinflußt werden. Andererseits kann eine unvollständige Verbrennung zur Erzeugug von Abgasen führen, deren Zusammensetzung vorgegebenen Grenzwerten nicht mehr genügt.

Zur Lösung dieser Probleme wurde in der DE 40 41 251 A1 sowie der DE 195 18 926 A1 bereits vorgeschlagen, einen Teil der in den aus der Ofenanlage abgezogenen heißen Rauchgasen enthaltenen Wärme zur Stromerzeugung zu nutzen.

Bei dem in der DE 40 41 251 A1 beschriebenen Verfahren werden dazu die gesamten Rauchgase des Drehrohrofens mit einer Temperatur von mindestens 700 °C nach Durchlaufen des Drehrohrofens und einer ein- oder zweistufigen Zyklonvorwärmanlage mit einer Temperatur von mindestens 700 °C aus dem Ofensystem abgezogen und zumindest teilweise in eine Einrichtung zur Erzeugung von elektrischer Energie eingeleitet. In diesem Zusammenhang sind in der DE 40 41251 A1 auch Verfahren nach dem Oberbegriff des Patentanspruchs 1 beschrieben.

Bei dem aus der DE 195 18 926 A1 bekannten Verfahren werden die heißen Rauchgase nach Durchlaufen der in Gasströmungsrichtung betrachtet zweiten Zyklonstufe einer vier- oder fünfstufigen Zyklonvorwärmanlage aus der Vorwärmanlage abgeleitet, durch eine Abhitzeverwertungseinrichtung eines Energieerzeugungssystems hindurchgeleitet und anschließend wieder in die nächstfolgende Zyklonstufe der Vorwärmanlage zurückgeführt.

Die Stromerzeugung mit beim Klinkerbrand entstehender Abwärme hat sich bei Durchführung der bekannten Verfahren im Vergleich zur Stromerzeugung mit herkömmlichen, fossilbefeuerten Heizkraftwerken als besonders vorteilhaft erwiesen, weil dazu im Hinblick auf die besonderen Bedingungen des Klinkerbrennprozesses, d. h. die dabei vorherrschenden hohen Temperaturen, langen Verweilzeiten und hohen Einbindungsgrade unter Vermeidung der Abgabe erhöhter Schadstoffkonzentrationen besonders solche Stoffe eingesetzt werden können, die einer thermischen Verwertung zugeführt werden müssen und deren Verwendung in herkömmlichen Kraftwerkskesseln im Hinblick auf die Schadstofferzeugung nur sehr eingeschränkt möglich ist. Beim Betrieb der bekannten Verfahren hat es sich jedoch gezeigt, daß der mit den bekannten Verfahren erreichbare Gesamtwirkungsgrad durch die zusätzliche Nutzung eines Teils der in den heißen Rauchgasen enthaltenen Wärme zur Stromerzeugung im Vergleich zu herkömmlichen Verfahren nur unerheblich verbessert wird.

Angesichts dieses Problems im Stand der Technik liegt der Erfindung die Aufgabe zugrunde, ein Verfahren der eingangs erläuterten Art bereitszustellen, mit dem der Wirkungsgrad bei der kombinierten Erzeugung von Zementklinker und elektrischem Strom verbessert werden kann

Erfindungsgemäß wird diese Aufgabe durch die im kennzeichnenden Teil des Patentanspruchs 1 angegebene Weiterbildung der bekannten Verfahren gelöst.

Zur Erläuterung der mit dem erfindungsgemäßen Verfahren erreichbaren Vorteile werden im folgenden zunächst die energetischen Verhältnisse in einer zur Ausführung eines derartigen Verfahrens betreibbaren Vorrichtung erläutert. Die Auskopplung von Wärme aus der Zyklonvorwärmanlage zur Stromerzeugung bedeutet natürlich eine zusätzliche Energieausgabe für die Gesamtanlage. Andererseits ermöglicht die zusätzliche Gasableitung zur Stromerzeugung bzw. bei der Durchführung des erfindungsgemäßen Verfahrens unter Sicherstellung einer hinreichenden Vorwärmung des Ausgangsmaterials aber sowohl eine Erhöhung der durch den Klinkerkühler geführten Sekundärluftmenge als auch eine Verminderung der Abgasverluste. Die Erhöhung des Wirkungsgrades der Wärmeübertragung im Klinkerkühler aufgrund der Erhöhung der durch den Klinkerkühler geführten Sekundärluftmenge hat zur Folge, daß die zur Stromerzeugung vorgenommene Wärmeauskopplung aus der Zyklonvorwärmanlage grundsätzlich mit einem unterproportionalen Anstieg des Brennstoffenergiebedarfs (sogenannter "Wärmepumpeneffekt") der Gesamtanlage verbunden ist.

Für die Umwandlung der aus der Zyklonvorwärmanlage ausgekoppelten Wärme in elektrischen Strom ist neben der Wärmemenge auch das Temperaturniveau von Bedeutung. Grundsätzlich ist der mögliche Wirkungsgrad der Verstromung von Wärmeenergie umso höher, je höher die Temperatur der abgeleiteten Rauchgase ist. Dieser Zusammenhang geht aus Fig. 1 hervor, in der die in der DE 195 18 926 A1 angebenen Wirkungsgrade bei der Verstromung heißer Rauchgase aufgetragen sind. Extrapoliert man die sich aus diesen Daten ergebende Trendkurve bis zu Temperaturen bis zu ca. 800-850 °C, wie sie nach der untersten Stufe einer mehrstufigen Zyklonvorwärmanlage vorliegen, so erhält man für diesen Temperaturbereich mögliche Wirkungsgrade von bis zu 35 %.

An praktisch einsetzbaren, mehrstufigen Zyklonvorwärmeanlagen steht grundsätzlich ein Temperaturbereich zur Verfügung, der sich von der nach der obersten Zyklonstufe vorliegenden Abgastemperatur (280-400 °C) bis zur Temperatur des Ofeneinlaufgases (1000-1200 °C) erstreckt. Aus technischen Gründen kann die Rauchgasableitung zur Stromerzeugung jedoch erst nach Durchlaufen der in Gaströmungsrichtung betrachtet ersten Stufe der Zyklonvorwärmanlage erfolgen, weil an dieser Stelle die aus der Ofenanlage ausgetragenen Aerosole und auch das Schwefeldioxid bereits weitgehend an das Ofenmehl gebunden sind. Das gilt für alle mit einer mehrstufigen Zyklonvorwärmanlage ausgeführten Vorrichtungen zur Erzeugung von Zementklinker, unabhängig davon, ob sie mit einer Zweitfeuerung und/oder einem Kalzinator betrieben werden.

Auch die maximal auskoppelbare Wärmemenge ist vom Temperaturniveau an der Ableitungsstelle abhängig. Betrachtet man eine vierstufige Zyklonvorwärmanlage, so stehen als mögliche Ableitungsstellen die Gasleitungen nach den einzelnen Zyklonstufen zur Verfügung. Im Extremfall kann jeweils die gesamte Rauchgasmenge an diesen Stellen abgezogen werden. Bei einer Beispielrechnung ergeben sich dabei die in der folgenden Tabelle angegebenen maximal auskoppelbaren Abwärmemengen:

| **Temperatur des Abhitzegases in °C** | **max. Abhitzeleistung in % der Feuerungsleistung der Ofenanlage** |
|---|---|
| 850 | 58 |
| 630 | 43 |
| 500 | 34 |
| 360 | 25 |

Die in dieser Tabelle angegebenen Zahlen stellen die Ergebnisse einer Beispielrechnung dar, deren Ergebnis mit den Betriebsdaten der jeweiligen Vorrichtung variieren kann. Der qualitative Verlauf, nach dem bei einem niedrigem Temperaturniveau von weniger als 400 °C nur etwa die Hälfte der Abwärmeleistung ausgekoppelt werden kann, die bei einer Temperatur von über 800 °C auskoppelbar ist, hat sich jedoch als allgemein gültig erwiesen.

Im folgenden wird nun der Zusammenhang zwischen der ausgekoppelten und zur Stromerzeugung genutzten Abhitzeleistung und dem Primärenergiebedarf der Zementherstellung aufgezeigt.

Im bundesdeutschen Durchschnitt beträgt der Brennstoffenergiebedarf des Klinkerbrennprozesses etwa 3500 kJ/kg Klinker. Der Klinkeranteil in den gemahlenen Zementen beträgt im Mittel ca. 80 %, so daß sich ein auf den Zement bezogener Brennstoffbedarf von ca. 2800 kJ/kg Zement ergibt. Hinzu kommt der elektrische Energiebedarf von etwa 360 kJ/kg Zement. Diese elektrische Energie kann in einem modernen, fossil befeuerten Kraftwerk mit einem Verstromungswirkungsgrad von etwa 45 % erzeugt werden. Mit einem solchen "Vergleichskraftwerk" benötigt man somit einen Primärenergieeinsatz von etwa 800 kJ/kg Zement, um die erforderlichen 360 kJ/kg Zement an elektrischer Energie zu erzeugen.

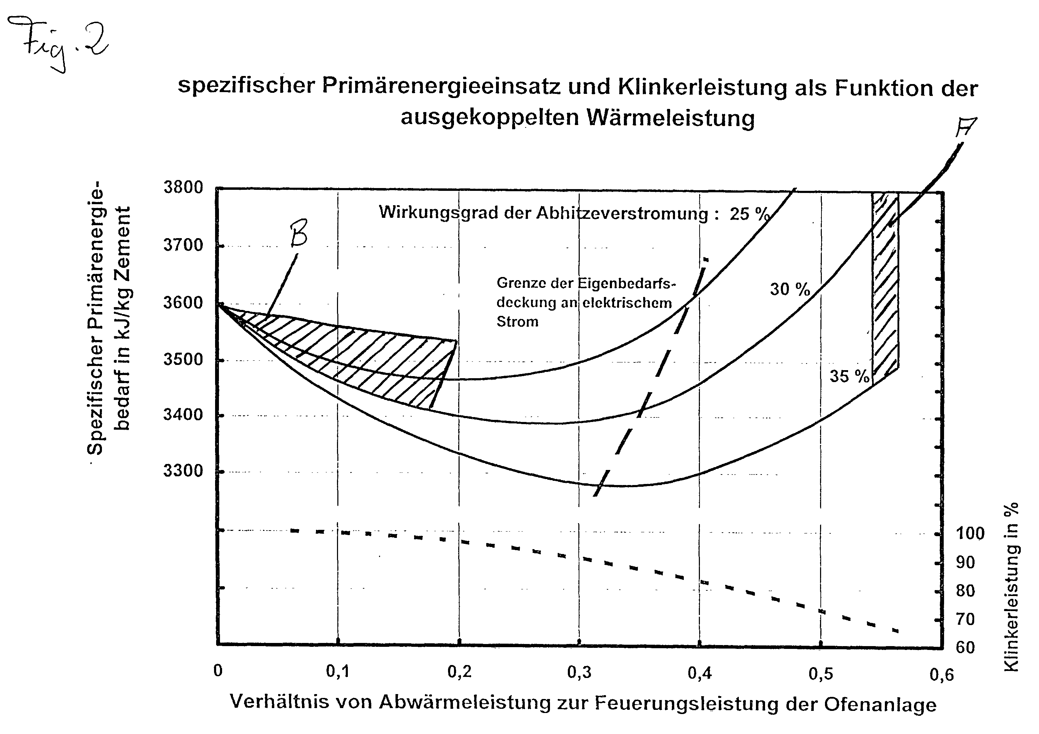

Für den Fall, daß der elektrische Strom zu 100 % in einem solchen Kraftwerk erzeugt wird, beträgt der für die Produktion von 1 kg Zement benötigte Primärenergieeinsatz somit 2800 + 800 = 3600 kJ. Dieser Wert ist der Ausgangspunkt der in Fig. 2 dargestellten Kurven. Wird nun ein Anteil der der Ofenanlage zugeführten Feuerungsleistung in Form von Abhitze ausgekoppelt und zur Stromerzeugung genutzt, so sinkt der insgesamt benötigte Primärenergieeinsatz, weil der beschriebene "Wärmepumpeneffekt" den im Vergleich mit einem Großkraftwerk relativ niedrigen Wirkungsgrad der Abhitzeverstromung überkompensiert. Für den Bereich sehr hoher Abwärmeleistungen überwiegt jedoch der Einfluß der Wirkungsgraddifferenz, so daß in diesem Bereich der Primärenergiebedarf wiederum ansteigt, bei geringen Wirkungsgraden der Abhitzeverstromung sogar bis über das Ausgangsniveau von 3600 kJ/kg Zement hinaus. Selbst wenn, wie bei der Darstellung in Fig. 2 geschehen, die über den Eigenbedarf hinaus erzeugte elektrische Energie in der Primärenergiebilanz als Gutschrift berücksichtigt wird, ist es daher nicht sinnvoll eine über diesen Eigenbedarf hinausgehende Wärmeauskopplung zu betreiben. Vielmehr fällt der energetisch optimale Arbeitsbereich zufällig mit dem Arbeitspunkt zusammen, bei dem gerade der Eigenbedarf an elektrischem Strom bei der Zementherstellung gedeckt werden kann. Dieser mit dem erfindungsgemäßen Verfahren erreichbare Arbeitspunkt, bei dem eine Abwärmeleistung von etwa 30 bis 40 % der Feuerungsleistung der Ofenanlage mit einer Temperatur von etwa 800 bis 850 °C ausgekoppelt wird, ist aus technischer Sicht auch deswegen vorteilhaft, weil der Rest der durch die mehrstufige Zyklonvorwärmanlage zu führenden Rauchgasmenge gerade ausreicht, um einen Strang der häufig zweistrangig ausgeführen Zyklonvorwärmer zu betreiben.

Im Unterschied zum erfindungsgemäßen Verfahren kann bei einem der in der DE 40 41 251 A1 beschriebenen Verfahren die gesamte Rauchgasmenge der Ofenanlage mit einer Temperatur von mindestens 700 °C nach Durchlaufen einer einstufigen Zyklonvorwärmanlage abgezogen werden. Der spezifische Primärenergiebedarf bei Durchführung dieses Verfahrens ist in Fig. 2 durch den schraffierten Bereich A dargestellt. Technisch ist dieses Verfahren dann sinnvoll, wenn das Ausgangsmaterial des Brennprozesses mit organischen Bestandteilen verunreinigt und daher eine Niedertemperaturvorwärmung ausgeschlossen ist. In diesem Fall ist eine zumindest teilweise Verstromung der anderweitig nicht nutzbaren Abwärme sinnvoll. Für einen mit üblichen Ausgangsmaterialien betriebenen Brennprozeß ist dieser Arbeitsbereich jedoch energetisch nicht optimal.

Bei dem in der DE 195 18 926 A1 angegebenen Verfahren erfolgt die Rauchgasableitung erst nach der in Gasströmungsrichtung betrachtet zweiten Zyklonstufe und somit bei Temperaturen von maximal 660 °C, wodurch der Wirkungsgrad bei der Abhitzeverstromung auf Werte von weniger als 30 % herabgesetzt wird. Darüber hinaus werden die abgeleiteten Rauchgase bei dem aus der DE 195 18 926 A1 bekannten Verfahren nach dem Durchlaufen des Dampfkessels bzw. Wärmetauschers der Stomerzeugungseinrichtung wieder in die Zyklonvorwärmanlage zurückgeführt. Der spezifische Primärenergiebedarf bei Durchführung dieses Verfahrens ist in Fig. 2 mit dem schraffierten Bereich B bezeichnet. Daraus geht hervor, daß die mit dem aus der DE 195 18 926 A1 bekannten Verfahren erreichbare Abwärmeauskopplung soweit eingeschränkt ist, daß maximal eine 50 %-ige Eigenbedarfsdeckung an elektrischem Strom möglich ist.

Im Gegensatz zu den beiden vorstehend erläuterten bekannten Verfahren wird bei dem erfindungsgemäßen Verfahren 30-40% der Feuerungsleistung der Ofenanlage zur Stromerzeugung ausgekoppelt. Dabei wird die durch die Abwärmeauskopplung bedingte Einschränkung der in Fig. 2 strichliert dargestellten Klinkerleistung, d. h. der pro Zeit erzeugbaren Klinkermenge toleriert.

Umgekehrt bedeutet das aber auch, daß die Klinkerleistung einer Ofenanlage unter Ausnutzung des erfindungsgemäßen Verfahrens durch Variation der ausgekoppelten Wärmeleistung den jeweiligen Absatzbedingungen angepaßt werden kann. Insofern kann ein Kapazitätsüberschuß als Feuerungsreserve betrachtet werden, die wirtschaftlich zur Stromerzeugung nutzbar ist.

Mit dem erfindungsgemäßen Verfahren kann die Stromerzeugung mit einem besonders hohen Wirkungsgrad erfolgen, wenn die Rauchgase mit einer Temperatur von mindestens 800 °C in die Stromerzeugungseinrichtung eingeleitet werden und dort in einem Abhitzekessel unter Bildung von für die Stromerzeugung nutzbarem Dampf auf 250 bis 300 °C gekühlt werden.

Selbst nach Durchlaufen eines Abscheiderzyklons können die aus der Ofenanlage abgezogenen Rauchgase eine Staubbeladung von bis zu 200 g/m³ aufweisen, so daß mit einem Staubanfall in der Stromerzeugungseinrichtung von mehreren Tonnen pro Stunde gerechnet werden muß. Die Zusammensetzung dieses Staubs entspricht etwa derjenigen des Materials im Einlaufbereich der Ofenanlage. Der in der Stromerzeugungseinrichtung anfallende Staub ist daher mit Chlorverbindungen und anderen Salzen angereichert und weist einen hohen Gehalt an freiem Kalk auf. Zur Entlastung der Chlor- und Salzkreisläufe im Ofensystem ist es daher besonders zweckmäßig, wenn der in der Stromerzeugungseinrichtung anfallende Staub zu einem geringen Anteil, der maximal etwa 3 % der Klinkerproduktion entspricht, als Bypass-Mehl aus dem Ofensystem ausgeschleust und direkt der Zementmahlung zugeführt wird. Der verbleibende Anteil des in der Stromerzeugungseinrichtung anfallenden Staubs kann entweder direkt zum Einlauf der Ofenanlage zurückgeführt oder zusammen mit dem Ausgangsmaterial dem Wärmetauscher aufgegeben werden, wodurch aufgrund des hohen Freikalkgehaltes eine wirkungsvolle Einbindung des in den oberen Stufen der Zyklonvorwärmanlage freigesetzten Schwefeldioxids erfolgt.

Zur Optimierung des Klinkerbrands und der Abwärmenutzung ist es besonders wirkungsvoll, wenn die Temperatur im Bereich des Einlaufs der Ofenanlage und damit auch die Temperatur der aus der Ofenanlage abgezogenen Rauchgase durch eine entsprechende Steuerung der Temperatur und/oder Menge des in die Ofenanlage eingebrachten Ausgangsmaterials geregelt wird. Dazu kann die erfindungsgemäße Vorrichtung eine zur Beschickung des Zyklonvorwärmers mit Ausgangsmaterial betreibbare Beschickungseinrichtung aufweisen, mit der ein in Abhängigkeit von der Temperatur am Einlauf der Ofenanlage variierbarer Anteil des zu brennenden Ausgangsmaterials ohne Vorwärmung direkt in den Einlauf des Drehofens oder ggf. den Calcinator eingebracht werden kann.

Besonders wirkungsvoll ist es, wenn der Zyklonvorwärmer mindestens zwei unabhängig voneinander betreibbare Stränge aufweist, von denen einer zur Reinigung der in die Stromerzeugungseinrichtung einzuleitenden Rauchgase betreibbar ist, während der andere zur Ableitung der verbleibenden Rauchgase und Vorwärmung des in der Ofenanlage zu brennenden Ausgangsmaterials betrieben wird.

Nachstehend wird die Erfindung unter Bezugnahme auf die Zeichnung, auf die hinsichtlich aller erfindungswesentlichen und in der Beschreibung nicht näher herausgestellten Einzelheiten ausdrücklich verwiesen wird, erläutert.

In der Zeichnung zeigt:

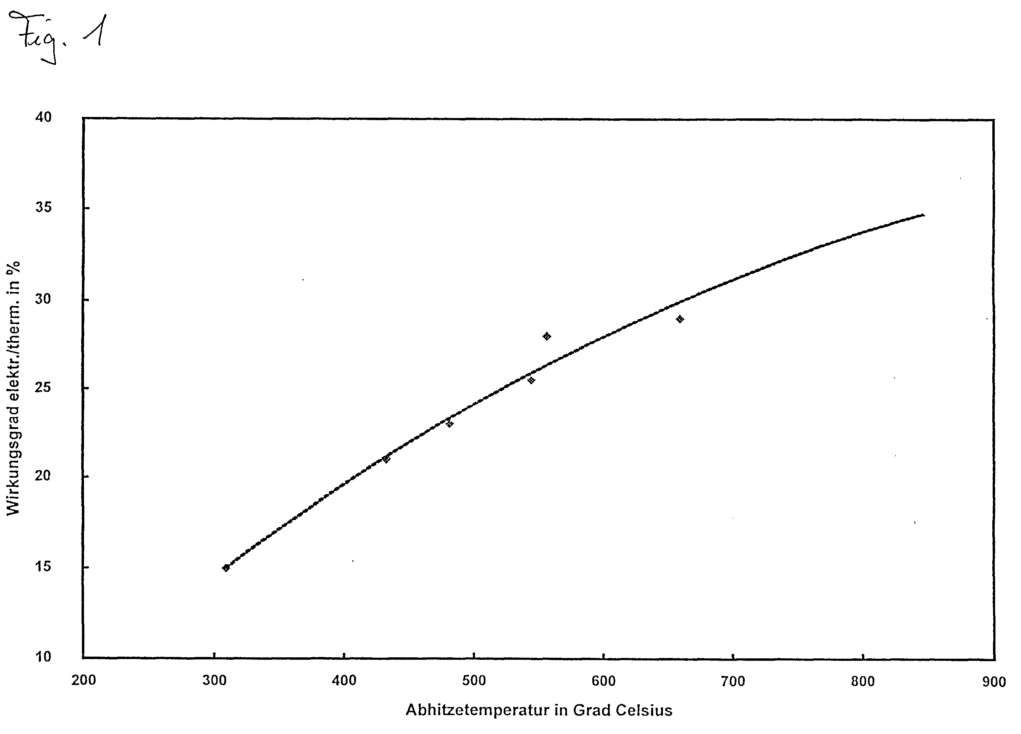

- Fig. 1: eine graphische Darstellung des bei der kombinierten Erzeugung von Zementklinker und elektrischem Strom erreichbaren Wirkungsgrades der Stromerzeugung in Abhängigkeit von der Temperatur der dazu verwendeten Rauchgase,
- Fig. 2: eine graphische Darstellung der zur Durchführung des erfindungsgemäßen Verfahrens benötigten spezifischen Primärenergiemenge in Abhängigkeit vom Verhältnis der zur Stromerzeugung ausgekoppelten Abwärmeleistung zur Feuerungsleistung der Ofenanlage und
- Fig. 3: eine schematische Darstellung einer zur Ausführung des erfindungsgemäßen Verfahrens betreibbaren Vorrichtung zur Herstellung von Zementklinker.

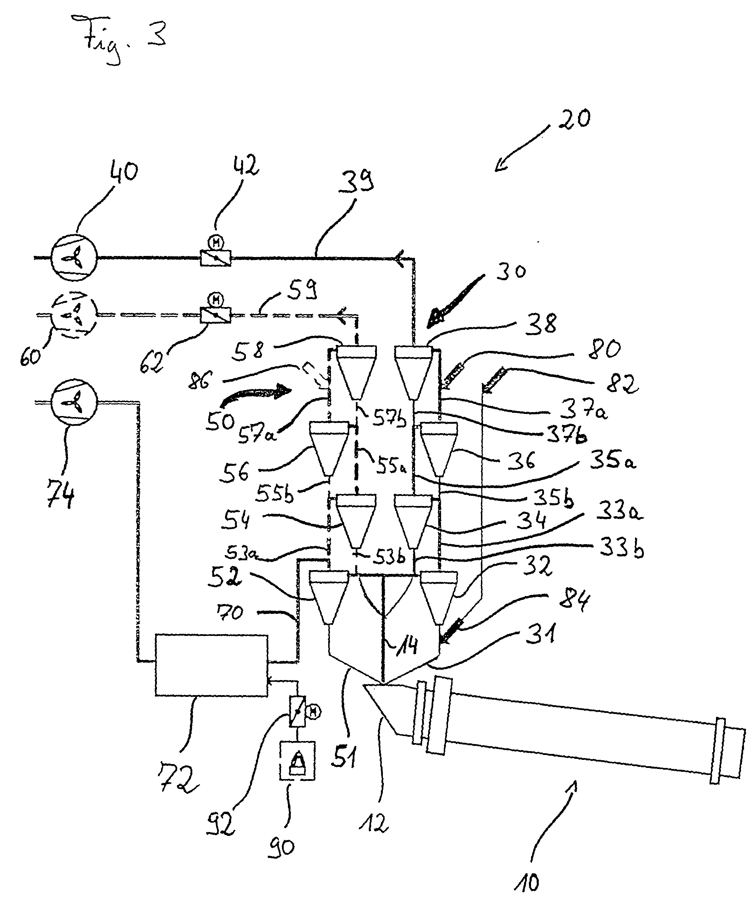

Die in Fig. 3 dargestellte Vorrichtung weist einen Drehofen 10 sowie eine Zyklonvorwärmanlage 20 auf. Die Zyklonvorwärmanlage besteht aus zwei unabhängig voneinander betreibbaren Strängen 30 und 50. Der erste Strang umfaßt ein Gebläse 40, mit dem im Drehofen 10 gebildete Rauchgase über einen Einlaufbereich 12 des Drehofens, eine Rauchgasleitung 14, ein Zyklon 32, eine Rauchgasleitung 33a, ein Zyklon 34, eine Rauchgasleitung 35a, ein Zyklon 36, eine Rauchgasleitung 37a, ein Zyklon 38 und eine Rauchgasleitung 39 aus dem Drehofen 10 abgezogen werden können.

Der zweite Strang 50 umfaßt ein Gebläse 60, mit dem die im Drehofen 10 gebildeten Rauchgase über den Einlaufbereich des Drehofens 12, die Rauchgasleitung 14, ein Zyklon 52, eine Rauchgasleitung 53a, ein Zyklon 54, eine Rauchgasleitung 55a, ein Zyklon 56, eine Rauchgasleitung 57a, ein Zyklon 58 und eine Rauchgasleitung 59 aus dem Drehofen abziehbar sind.

In den Rauchgasleitungen 39 und 59 sind Klappenventile 42 bzw. 62 angeordnet, mit denen der Rauchgasstrom durch die Stränge 30 und 50 gesteuert werden kann. Mit einer in der Zeichnung nicht näher dargestellten Beschickungseinrichtung kann der Zyklonvorwärmanlage 20 mehlförmiges Ausgangsmaterial aufgegeben werden. Wie durch den Pfeil 80 angedeutet, ist es dazu einerseits möglich, das Ausgangsmaterial in die Rauchgasleitung 37a einzuleiten, in der es dann mit dem Rauchgasstrom mitgerissen, in dem Zyklon 38 abgeschieden, durch ein Feststoffaustragrohr 37b des Zyklons 38 in die Rauchgasleitung 35a eingespeist, im Zyklon 36 abgeschieden, durch ein Feststoffaustragrohr 35b in die Rauchgasleitung 33a eingeleitet, im Zyklon 34 abgeschieden, über ein Feststoffrohr 33b in die Rauchgasleitung 14 eingeleitet, im Zyklon 32 abgeschieden und schließlich über ein Feststoffaustragrohr 31 in den Einlaufbereich 12 des Drehofens 10 gelangt. Auf ähnliche Weise ist es auch möglich, das Ausgangsmaterial, wie durch den Pfeil 86 angedeutet, in die Rauchgasleitung 57a einzuleiten und über das Zyklon 58, ein Feststoffaustragrohr 57b, die Rauchgasleitung 55a, das Zyklon 56, ein Feststoffaustragrohr 55b, die Rauchgasleitung 53a, das Zyklon 54, ein Feststoffaustragrohr 53b, die Rauchgasleitung 14, das Zyklon 52 und ein Feststoffaustragrohr 51 dem Einlaufbereich 12 des Drehofens 10 aufzugeben. Schließlich kann auch noch eine in Abhängigkeit von der Temperatur im Einlaufbereich 12 des Drehofens 10 variierbare Menge des Ausgangsmaterials unter Umgehung der Zyklonvorwärmanlage 20 direkt in den Einlaufbereich 12 des Drehofens 10 eingeleitet werden, wie durch den Pfeil 84 angedeutet.

Mit Hilfe der zwischen dem Zyklon 52 und dem Zyklon 54 an die Rauchgasleitung 53a angeschlossenen Rauchgasleitung 70 kann ein Teil des im Drehofen 10 erzeugten Rauchgases in eine zur Umwandlung der darin enthaltenen Wärme in elektrische Energie betreibbare Stromerzeugungseinrichtung 72 eingeleitet werden. Dazu wird das Rauchgas mit einem Gebläse 74 aus der Rauchgasleitung 53a abgeleitet. Durch Einstellung der Saugleistungen der Gebläse 40, 60 und 74 bzw. der Klappenventile 42 und 62 ist es möglich, die durch die Zyklonvorwärmstränge 30 und 50 bzw. die Rauchgasleitung 70 aus dem Drehofen 10 abgezogenen Rauchgasmengen unabhängig voneinander einzustellen. Dabei ist insbesondere auch eine Betriebsart möglich, bei der der gesamte das Zyklon 52 durchlaufende Rauchgasstrom in die Stromerzeugungseinrichtung 72 abgeleitet wird. In dieser Betriebsart erfolgt die Vorwärmung des Ausgangsmaterials nahezu ausschließlich im Zyklonvorwärmstrang 30, wie durch die strichlierte Darstellung der Rauchgasleitungen 53a, 55a, 57a und 59 sowie der Feststoffaustragrohre 53b, 55b in der Zeichnung angedeutet. In dieser Betriebsart wird der Zyklonvorwärmanlage 20 das Ausgangsmaterial ausschließlich an den durch die Pfeile 80 und 84 angegebenen Stellen aufgegeben.

Der Stromerzeugungseinrichtung 72 ist zur Aufrechterhaltung der Stromerzeugung bei längerfristigem Stillstand der Drehofenanlage eine Brennkammer 90 zugeordnet, in der durch die Verbrennung von Kohlenstaub und/oder schwefelarmen Heizölen Hitze erzeugt und über ein Klappenventil 92 der Stromerzeugungseinrichtung 72 zugeführt werden kann.

Die beim Betrieb der Stromerzeugungseinrichtung 72 anfallenden Staub- und Ascheabscheidungen können mit einer in der Zeichnung nicht näher dargestellten Rückführungseinrichtung zumindest teilweise in die Ofenanlage zurückgeführt werden. Die Rückführung kann dabei entweder an der durch den Pfeil 80 bezeichneten Stelle oder unter Umgehung der Zyklonvorwärmanlage 20 direkt an der durch den Pfeil 84 bezeichneten Stelle erfolgen.

Die Erfindung ist nicht auf das anhand der Zeichnung erläuterte Ausführungsbeispiel beschränkt. Vielmehr ist es auch möglich, das erfindungsgemäße Verfahren mit einer nur einen Zyklonvorwärmstrang aufweisenden Klinkerbrandanlage zu betreiben. Ferner ist das erfindungsgemäße Verfahren auch an solchen Drehofenanlagen zu betreiben, bei denen die Rauchgasleitung als Calcinator mit zusätzlicher Brennstoffaufgabe ausgeführt ist und/oder bei denen die Verbrennungsluft der Zweitfeuerung über eine Tertiärluftleitung am Drehofen vorbeigeführt wird. Darüber hinaus kann die Regelung der durch die einzelnen Rauchgasleitungen abgezogenen Rauchgasmengen unter Vermeidung des Einsatzes von Klappenventilen ausschließlich durch Einstellung der Leistung der Gebläse erfolgen. Die durch die Zyklonvorwärmstränge und die Stromerzeugungsanlage abgezogenen Rauchgase können nach der anhand der Zeichnung erläuterten Rauchgasführung wieder zusammengeführt und mit vorhandenen Abgassystemen entweder für Trocknungsprozesse benutzt oder nach entsprechender Konditionierung im Verdampfungskühler über Elektrofilter zu einem Kamin geleitet werden.

## Patentansprüche

1. Verfahren zur kombinierten Erzeugung von Zementklinker und elektrischem Strom, bei dem ein Ausgangsmaterial nach Durchlaufen einer mehrstufigen Zyklonvorwärmanlage im Gegenstrom zu aus einer Ofenanlage abgezogenen heißen Rauchgasen in der Ofenanlage zu Zementklinker gebrannt und ein Teil der in den heißen Rauchgasen enthaltenen Wärme zur Stromerzeugung genutzt wird, bei dem ein Teil der heißen Rauchgase nach Durchlaufen der in Gasströmungsrichtung betrachtet ersten Stufe der mehrstufigen Zyklonvorwärmanlage mit einer Temperatur von 700 bis 900 °C daraus abgeleitet und in eine zur Umwandlung der darin enthaltenen Wärme in elektrische Energie betreibbare Stromerzeugungseinrichtung eingeleitet wird, während der Rest der heißen Rauchgase zur Vorwärmung des Ausgangsmaterials durch die folgenden Zyklonstufen geleitet wird, **dadurch gekennzeichnet, daß** mit den abgeleiteten heißen Rauchgasen 30-40 % der Feuerungsleistung der Ofenanlage als Abwärmeleistung aus der Zyklonvorwärmanlage ausgekoppelt werden.

2. Verfahren nach Anspruch 1, **dadurch gekennzeichnet, daß** die heißen Rauchgase mit einer Temperatur von 800 bis 850 °C aus der Zyklonvorwärmanlage abgeleitet werden.

3. Verfahren nach Anspruch 1 oder 2, **dadurch gekennzeichnet, daß** zumindest die in Gasströmungsrichtung betrachtet unterste Stufe der Zyklonvorwärmanlage mindestens zwei parallel zueinander betreibbare Zyklonabscheider aufweist und die Rauchgase durch eine in Gasströmungsrichtung betrachtet hinter einem dieser Zyklonabscheider angeordnete Rauchgasleitung aus der Zyklonvorwärmanlage abgeleitet werden.

4. Verfahren nach einem der vorhergehenden Ansprüche, **dadurch gekennzeichnet, daß** die Rauchgase in einem Abhitzekessel der Stromerzeugungseinrichtung unter Bildung von für die Stromerzeugung nutzbarem Dampf auf unter 350 °C vorzugsweise auf 250 bis 300 °C gekühlt werden.

5. Verfahren nach einem der vorhergehenden Ansprüche, **dadurch gekennzeichnet, daß** in der Stromerzeugungseinrichtung im Rauchgas mitgeführter Staub abgeschieden und der abgeschiedene Staub zumindest teilweise in die Ofenanlage oder einen zum Drehofeneinlauf abführenden Steigschacht zurückgeführt wird und/oder dem Ausgangsmaterial zugeführt und/oder aus dem Klinkerbrennprozeß ausgeschleust wird.

6. Verfahren nach einem der vorhergehenden Ansprüche, **dadurch gekennzeichnet, daß** die Temperatur im Bereich des Einlaufs der Ofenanlage durch Steuerung der Temperatur und/oder Menge des in die Ofenanlage eingebrachten Ausgangsmaterials geregelt wird.

7. Verfahren nach einem der Ansprüche 4 bis 6, **dadurch gekennzeichnet, daß** die in der Stromerzeugungseinrichtung auf eine Temperatur von unter 350 °C gekühlten Rauchgase separat oder nach Vermischung mit anderen Abgas- und/oder Abluftströmen der Ofenanlage als Trocknungsgase für im Verbund mit der Ofenanlage betriebene Trocknungsprozesse genutzt werden.

8. Verfahren nach einem der vorhergehenden Ansprüche, **dadurch gekennzeichnet, daß** der Zementklinker nach Verlassen der Ofenanlage in eine Kühlanlage eingeleitet und darin im Gegenstrom zu von außen eingeleiteter Kühlluft gekühlt wird, wobei die Kühlluft nach Durchlaufen der Kühlanlage als Verbrennungsluft in die Ofenanlage eingeleitet wird.

## Claims

1. Method for combined production of cement clinker and electric current, in the case of which, after passing through a multistage cyclone preheating system in counterflow to hot flue gases withdrawn from a kiln plant, an initial material is burnt in the kiln plant to form cement clinker, and a portion of the heat contained in the hot flue gases is used for the generation of current, and in the case of which, after passing through the first stage, seen in the gas flow direction, of the multistage cyclone preheating system, a portion of the hot flue gases is led off at a temperature of 700 to 900°C and led into a current generating device which can be operated to convert the heat contained therein into electric energy, while the remainder of the hot flue gases is led through the following cyclone stages in order to preheat the initial material, **characterized in that** 30-40% of the firing output of the kiln plant is coupled out, with the hot flue gases led off, from the cyclone preheating system as waste heat output.

2. Method according to Claim 1, **characterized in that** the hot flue gases are led off from the cyclone preheating system at a temperature of 800 to 850°C.

3. Method according to Claim 1 or 2, **characterized in that** at least the lowest stage, seen in the gas flow direction, of the cyclone preheating system has at least two cyclone separators which can be operated in parallel with one another, and the flue gases are led off from the cyclone preheating system through a flue gas duct arranged downstream, seen in the gas flow direction, of one of these cyclone separators.

4. Method according to one of the preceding claims, **characterized in that** the flue gases are cooled to below 350°C, preferably to 250 to 300°C, in a waste heat boiler of the current generating device with the formation of steam which can be used for the current generation.

5. Method according to one of the preceding claims, **characterized in that** dust carried along in the flue gas in the current generating device is collected, and the collected dust is guided back at least partially into the kiln plant or a riser duct leading off to the rotary kiln inlet, and/or fed to the initial material and/or discharged from the clinker burning process.

6. Method according to one of the preceding claims, **characterized in that** the temperature in the region of the inlet of the kiln plant is regulated by controlling the temperature and/or quantity of the initial material introduced into the kiln plant.

7. Method according to one of Claims 4 to 6, **characterized in that** the flue gases cooled in the current generating device to a temperature of below 350°C are used separately or after mixture with other exhaust gas streams of the kiln plant as drying gases for drying processes operated in conjunction with the kiln plant.

8. Method according to one of the preceding claims. **characterized in that** after leaving the kiln plant the cement clinker is led into a cooling system and cooled therein in counterflow to the cooling air led in from outside, the cooling air being led as combustion air into the kiln plant after passing through the cooling system.

## Revendications

1. Procédé de production combinée de clinker de ciment et de courant électrique, dans lequel une matière de départ, après son passage dans une installation de préchauffage à cyclones multiétages à contre-courant avec des gaz de fumée chauds évacués d'une installation de four, est calcinée en clinker de ciment dans l'installation de four et une partie de la chaleur contenue dans les gaz de fumée chauds est utilisée pour la production de courant, et dans lequel une partie des gaz de fumée chauds, après passage dans le premier étage de l'installation de préchauffage multiétages, dans la direction d'écoulement des gaz, en est déchargée à une température de 700 à 900°C et est introduite dans un dispositif de production de courant pouvant être mis en oeuvre en vue de transformer en énergie électrique la chaleur contenue, tandis que le reste des gaz de fumée chauds est envoyé dans les étages de cyclones suivants pour le préchauffage de la matière de départ, **caractérisé en ce que**, avec les gaz de fumée chauds déchargés, 30 à 40% de la puissance du foyer de l'installation de four sont extraits comme puissance de chaleur perdue de l'installation de préchauffage à cyclones.

2. Procédé suivant la revendication 1, **caractérisé en ce que** les gaz de fumée chauds sont déchargés de l'installation de préchauffage à cyclones à une température de 800 à 850°C.

3. Procédé suivant la revendication 1 ou 2, **caractérisé en ce qu'**au moins l'étage le plus bas, dans la direction d'écoulement, de l'installation de préchauffage à cyclones, présente au moins deux séparateurs à cyclones pouvant être mis en oeuvre en parallèle l'un par rapport à l'autre et les gaz de fumée sont déchargés de l'installation de préchauffage à cyclones par un conduit à gaz de fumée disposé à la suite de l'un de ces séparateurs à cyclones, dans la direction d'écoulement des gaz.

4. Procédé selon l'une des revendications précédentes, **caractérisé en ce que** les gaz de fumée sont refroidis en dessous de 350°C, de préférence à 250-300°C, dans une chaudière de récupération du dispositif de production de courant avec formation de vapeur utilisable pour produire du courant.

5. Procédé selon l'une des revendications précédentes, **caractérisé en ce que** de la poussière entraînée dans les gaz de fumée est séparée dans le dispositif de production de courant et la poussière séparée est recyclée au moins en partie dans l'installation de four ou dans une gaine montante l'emmenant vers l'entrée du four tournant et/ou ajoutée à la matière de départ et/ou évacuée du processus de calcination produisant le clinker.

6. Procédé selon l'une des revendications précédentes, **caractérisé en ce que** la température dans la zone d'admission de l'installation de four est réglée par contrôle de la température et/ou de la quantité de la matière de départ introduite dans l'installation de four.

7. Procédé selon l'une des revendications 4 à 6, **caractérisé en ce que** les gaz de fumée refroidis à une température inférieure à 350°C dans le dispositif de production de courant sont utilisés séparément ou après mélange avec d'autres effluents gazeux et/ou flux d'air d'évacuation de l'installation de four comme gaz de séchage pour des opérations de séchage conduites en liaison avec l'installation de four.

8. Procédé selon l'une des revendications précédentes, **caractérisé en ce que** le clinker de ciment sortant de l'installation de four est envoyé à une installation de refroidissement dans laquelle il est refroidi à contre-courant avec de l'air de refroidissement qui arrive de l'extérieur, cet air de refroidissement étant introduit dans l'installation de four comme air de combustion après son passage dans l'installation de refroidissement.
